# EUROPÄISCHE PATENTANMELDUNG

(11) **EP 1 323 561 A1**
(43) Veröffentlichungstag der Anmeldung: **02.07.2003**
(21) Anmeldenummer: 02026741.5
(22) Anmeldetag: 30.11.2002
(51) Int. Cl.: B60J 7/06, B60J 7/12, B60J 7/10, B29C 45/14

(54) **Verfahren und Vorrichtung zum Verstärken einer Verdeckplane**

(30) Priorität: 28.12.2001 DE 10164500
(71) Anmelder: Webasto Vehicle Systems International GmbH, 82131 Stockdorf (DE)
(72) Erfinder: Schütt, Thomas, 82256 Fürstenfeldbruck (DE)
(74) Vertreter: Wiese, Gerhard

(57) **Zusammenfassung**

Die Erfindung betrifft ein Verfahren sowie eine Vorrichtung zum Verstärken einer Verdeckplane (34) oder dergleichen, insbesondere für Kraftfahrzeugverdecke, wobei die Verdeckplane (34) ganz oder teilweise mit Verstärkungsbauteilen (Spriegel 32) unterlegt wird. Dabei ist vorgesehen, daß das Verstärkungsbauteil (Spriegel 32) in einer Gießform (24) direkt an die Verdeckplane (34) angeformt wird. Für den Fall, daß eine Verdeckplane (34) nicht vollflächig mit dem Verstärkungsbauteil (Spriegel 32) verbunden werden soll, wird der nicht mit dem Verstärkungsbauteil zu verbindende Teil der Verdeckplane (34) über einen Abzweigungskanal (36) aus der Gießform (24) herausgeleitet.

## Beschreibung

Die vorliegende Erfindung betrifft ein Verfahren sowie eine Vorrichtung zum Verstärken einer Verdeckplane oder dergleichen, insbesondere für Kraftfahrzeugverdecke, wobei die Verdeckplane ganz oder teilweise mit Verstärkungsbauteilen unterlegt wird.

Derartige Verstärkungsbauteile dienen zum Abstützen und Formen der Verdeckplane, aber auch zur akustischen und thermischen Isolierung des Verdecks. Als Beispiele für derartige Verstärkungsbauteile seien die in seitlichen Führungsschienen geführten Spriegel von Faltschiebedächern oder auch großflächige, plattenartige Bauteile bei modernen Cabrioverdecken (z.B. RHT = Rejectable Hard Top) genannt.

Bei herkömmlichen Verdecksystemen werden derartige Verstärkungsbauteile unter die Verdeckplane geklebt oder mit dieser verschweißt. Dabei entstehen im allgemeinen ästhetisch wenig ansprechende Abdrücke bzw. Einfallstellen im Bereich dieser Bauteile. Außerdem haben sich diese Klebe- bzw. Schweißverbindungen häufig als wenig beständig erwiesen, so daß sich die Verstärkungsbauteile nach längerem Einsatz ganz oder teilweise von der Verdeckplane gelöst haben. Ein weiterer Nachteil des bekannten Verfahrens wird auch darin gesehen, daß die Herstellung der Verstärkungsbauteile und deren Verbindung mit der Verdeckplane getrennte Arbeitsgänge sind, so daß das Herstellungsverfahren verhältnismäßig aufwendig ist.

Es ist die Aufgabe der vorliegenden Erfindung, ein Verfahren sowie eine Vorrichtung zum Verstärken einer Verdeckplane oder dergleichen zu schaffen, welche eine gute und dauerhafte Verbindung der Verstärkungsbauteile mit der Verdeckplane ermöglichen, die ferner eine gute Stützfunktion und eine ästhetisch ansprechende Außenoptik des Verdeckes ohne Abdrücke und Einfallstellen gewährleisten und die eine gegenüber dem herkömmlichen Verfahren kostengünstigere Herstellung erlauben.

Diese Aufgabe ist erfindungsgemäß dadurch gelöst, daß die Verstärkungsbauteile in einer Spritzgießform direkt an die Verdeckplane angeformt werden. Es hat sich erwiesen, daß auf diese Weise eine gute und dauerhafte Verbindung zwischen der Verdeckplane und den Verstärkungsbauteilen erzielt wird, wobei sich der Übergang von den verstärkten Bereichen zu den nicht verstärkten Bereichen so gestalten läßt, daß Abdrücke und Einfallstellen vermieden werden; darüber hinaus wird dadurch, daß die Bildung der Verstärkungsbauteile und deren Verbindung mit der Verdeckplane in einem einzigen Arbeitsgang erfolgen, das Herstellungsverfahren insgesamt kostengünstiger.

Bei dem erfindungsgemäßen Verfahren ist vorgesehen, daß die zu verstärkende Verdeckplane in eine im wesentlichen der Form des Verstärkungsbauteils entsprechende Kunststoff-Gießform so eingelegt wird, daß es einen Formhohlraum zur Bildung des Verstärkungsbauteils begrenzt, und daß das Verstärkungsbauteil dann durch Einspritzen eines geeigneten Kunststoffmaterials direkt an die in der Gießform liegende Verdeckplane angespritzt wird. Nach dem Aushärten des Kunststoffmaterials kann das fertige Verdeck aus der Gießform entnommen werden.

In einer bevorzugten Ausgestaltung des Verfahrens ist vorgesehen, daß das Kunststoffmaterial ein Schaumstoff ist. Derartige Schaumstoffmaterialien haben ausreichende Festigkeitseigenschaften, eine gute Formbeständigkeit und hervorragende akustische und thermische Isoliereigenschaften.

In manchen Fällen wird das Verstärkungsbauteil nur über einen Teil seiner der Verdeckplane zugewandten Fläche mit dieser verbunden, weil beispielsweise die Verdeckplane beim Öffnen des Verdecks an dieser Stelle eine Schlaufe bilden soll. Für einen solchen Fall ist erfindungsgemäß vorgesehen, daß der nicht mit dem Verstärkungsbauteil zu verbindende Teil der Verdeckplane für den Anformvorgang über einen Abzweigungskanal von dem Formhohlraum fort und beispielsweise aus der Gießform herausgeführt ist, wie anhand eines Ausführungsbeispieles genauer dargelegt wird.

Für den Fall, daß die Verdeckplane im Bereich eines Verstärkungsbauteils in eine doppelt liegende Verdeckplane übergehen soll, ist gemäß einer weiteren Ausgestaltung der Erfindung vorgesehen, daß die obere Lage der doppelt liegenden Verdeckplane über einen Abzweigungskanal aus der Gießform herausgeführt ist, wie ebenfalls anhand eines Ausführungsbeispieles dargelegt wird.

Eine Vorrichtung zur Durchführung des erfindungsgemäßen Verfahrens ist dadurch gekennzeichnet, daß die Gießform zumindest in der Ebene der eingelegten Verdeckplane in ein die Verdeckplane abstützendes Oberwerkzeug und ein den Formhohlraum zur Bildung des Verstärkungsbauteils aufweisendes Unterwerkzeug geteilt ist. Die Trennebene zwischen dem Oberwerkzeug und dem Unterwerkzeug ist im wesentlichen die durch die Verdeckplane definierte Ebene.

Die zum Herausführen der Verdeckplane aus der Gießform vorgesehenen Abzweigungskanäle sind gemäß einer weiteren Ausgestaltung der Erfindung im Oberwerkzeug ausgebildet, d.h. die Abzweigungskanäle führen jeweils von dem Formhohlraum zur Bildung des Verstärkungsbauteils fort.

Eine weitere Vereinfachung der Gießform ergibt sich, wenn das Oberwerkzeug im Bereich des Abzweigungskanals nochmals geteilt ist, wobei die Teilungsfuge als Abzweigungskanal ausgebildet ist.

Mehrere Ausführungsbeispiele der Erfindung sind in der Zeichnung dargestellt und im folgenden näher beschrieben. Es zeigt:
- Fig. 1: schematisch in einer perspektivischen Darstellung ein Kraftfahrzeug mit einem Faltschiebedach;
- Fig. 2: einen Teilschnitt durch das Faltschiebedach der Fig. 1 etwa entsprechend der Schnittlinie II-II;
- Fig. 3: eine Gießform zur vollflächigen Verbindung eines Spriegels mit einer Verdeckplane;
- Fig. 4: eine Gießform zur teilflächigen Verbindung eines Spriegels mit einer Verdeckplane;
- Fig. 5: eine Gießform zur Verbinden einer doppelt liegenden Verdeckplane mit einem Spriegel.

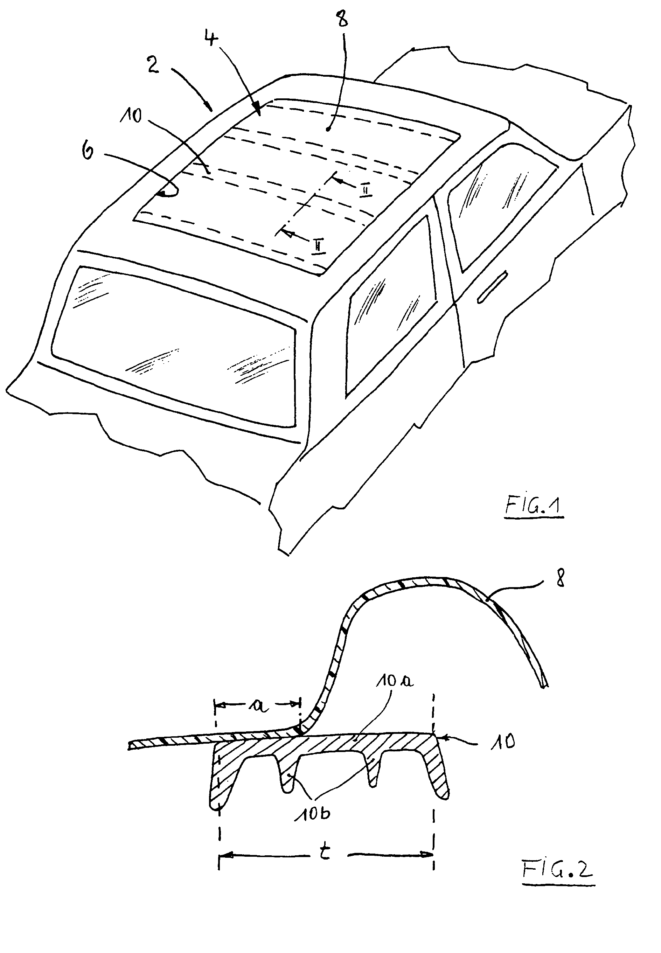

Fig. 1 zeigt ein Kraftfahrzeug 2 mit einem Faltschiebedach 4 zum wahlweisen Öffnen und Schließen eines Dachausschnittes 6. Das Faltschiebedach 4 besteht im wesentlichen aus einer flexiblen Verdeckplane 8, die mit mehreren (im Beispiel mit vier) in seitlichen Führungsschienen geführten Spriegeln 10 verbunden ist. Zum Öffnen des Faltschiebedaches 4 werden die Spriegel 10 nach hinten verschoben, wobei die Verdeckplane 8 nach oben hochstehende Schlaufen bildet, wie allgemein bekannt ist.

Fig. 2 zeigt einen Schnitt etwa entsprechend der Schnittlinie II-II in Fig. 1, wobei jedoch die Verdeckplane 8 nicht gestreckt ist, wie es dem in Fig. 1 gezeigten geschlossenen Zustand des Faltschiebedaches 4 entspricht, sondern eine nach oben hochstehende Schlaufe bildet, die beim Öffnen des Faltschiebedaches 4, d.h. beim Zusammenschieben benachbarter Spriegel 10 entsteht. Fig. 2 läßt weiter erkennen, daß die Verdeckplane 8 nicht vollflächig, d.h. über die gesamte Tiefe t mit dem Spriegel 10 verbunden ist, sondern nur über einen Tiefenbereich a, was größere, weniger scharf abgebogene Schlaufen zwischen einzelnen Spriegeln 10 ermöglicht. Der Spriegel 10 besteht im wesentlichen aus einer flachen Leiste 10a mit an deren Unterseite angeordneten verstärkten Längsrippen 10b.

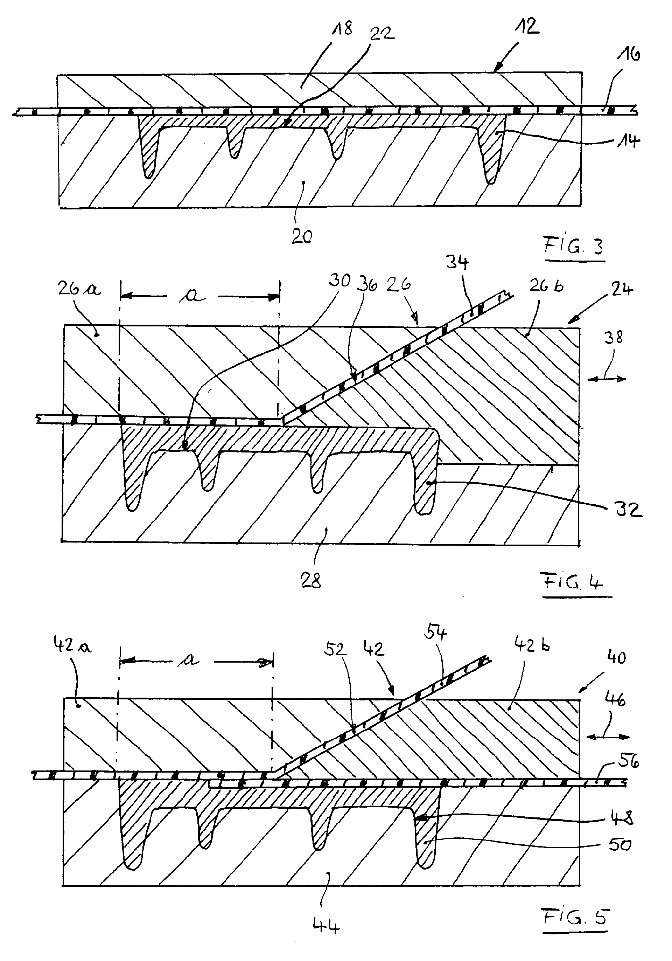

Fig. 3 zeigt schematisch eine Gießform 12 zum Anformen eines Spriegels 14 an eine Verdeckplane 16. Der Spriegel 14 ist wie in Fig. 2 in einem Querschnitt dargestellt. Die Gießform 12 umfaßt ein Oberwerkzeug 18 und ein Unterwerkzeug 20. Das Unterwerkzeug 20 weist einen Formhohlraum 22 zur Bildung des Spriegels 14 auf. Der Spriegel 14 hat wiederum wie im Beispiel der Fig. 2 die Form einer flachen Leiste, an deren Unterseite verstärkende Längsrippen ausgebildet sind. Das Unterwerkzeug 20 ist außerdem in bekannter und deshalb nicht näher dargestellter Weise mit Einspritzkanälen zum Einspritzen des den Spriegel 14 bildenden Kunststoffmaterials versehen.

Um die Verdeckplane 16 mit einem Spriegel 14 zu verbinden, wird die Verdeckplane in die Gießform 12 eingelegt, die Gießform wird geschlossen, und sodann wird das den Spriegel 14 bildende Kunststoffmaterial eingespritzt, wobei es sich mit der Verdeckplane 16 innig verbindet. Dabei können die Übergänge von den verstärkten Bereichen zu den nicht verstärkten Bereichen der Verdeckplane so gestaltet werden, daß Abdrücke und Einfallstellen nicht auftreten. Wie weiter vorne bereits ausgeführt wurde, wird als Kunststoffmaterial vorzugsweise ein Schaummaterial eingesetzt, so daß der Einspritzvorgang auch als Anschäumvorgang bezeichnet werden kann.

Fig. 4 zeigt eine Gießform 24, die wiederum aus einem Oberwerkzeug 26 und einem Unterwerkzeug 28 besteht. Das Unterwerkzeug 28 weist einen Formhohlraum 30 zur Bildung eines Spriegels 32 auf. Der Spriegel 32 hat wiederum die Form einer flachen Leiste mit an seiner Unterseite ausgebildeten Längsrippen. Die Verdeckplane 34 soll wie im Beispiel der Fig. 2 nur über einen Tiefenbereich a mit dem Spriegel 32 verbunden werden. Zu diesem Zweck wird der nicht mit dem Spriegel 32 zu verbindende Teil der Verdeckplane 34 über einen im Oberwerkzeug 26 ausgebildeten Abzweigungskanal 36 aus der Gießform 24 herausgeführt. Wie die Fig. 4 erkennen läßt, ist das Oberwerkzeug 24 im Bereich des Abzweigungskanals 34 nochmals in einen festen Formteil 26a und in einen in Richtung des Pfeiles 38 verschiebbaren, schieberartigen Formteil 26b geteilt, wobei die Teilungsfuge zwischen dem Formteil 26a und dem Formteil 26b den Abzweigungskanal 36 bildet.

Um die Verdeckplane 34 in der in Fig. 4 gezeigten Weise mit einem Spriegel 32 zu verbinden, wird beispielsweise die Verdeckplane 34 auf das Unterwerkzeug 28 aufgelegt. Sodann wird das Formteil 26a auf das Unterwerkzeug 28 aufgesetzt und die Verdeckplane entlang der Unterkante des Formteils 26a nach oben geführt. Sodann wird das Formteil 26b eingesetzt, wobei die Trennfuge zwischen dem Formteil 26a und dem Formteil 26b den Abzweigungskanal 36 bildet. Sodann wird das Kunststoffmaterial zur Bildung des Spriegels 32 eingespritzt. Nach dem Aushärten des Spriegels 32 wird das Formteil 26b in eine Öffnungsstellung verschoben und das Formteil 26a vom Unterwerkzeug 28 abgehoben, so daß das aus der Verdeckplane 34 und dem Spriegel 32 bestehende Bauteil entnommen werden kann.

Fig. 5 zeigt eine Gießform 40, die wiederum aus einem Oberwerkzeug 42 und einem Unterwerkzeug 44 besteht. Das Oberwerkzeug 42 ist wie im Beispiel der Fig. 4 in einen festen Formteil 42a und in einen beweglichen, schieberartigen Formteil 42b geteilt, welcher in Richtung des Doppelpfeiles 46 verschiebbar ist. Im Unterwerkzeug 44 ist ein Formhohlraum 48 zur Bildung eines Spriegels 50 ausgebildet. Zwischen dem festen Formteil 42a und dem beweglichen Formteil 42b ist ein Abzweigungskanal 52 ausgebildet, über den ein nicht mit dem Spriegel 50 zu verbindender Teil einer ersten Verdeckplane 54 aus der Gießform 40 herausgeführt werden kann, wie im Beispiel der Fig. 3 bereits erläutert wurde. Wie Fig. 5 erkennen läßt, sind das Unterwerkzeug 44 einerseits und das Formteil 42b des Oberwerkzeugs 42 andererseits so ausgebildet, daß zwischen diesen Platz zum Einlegen einer mit der ersten Verdeckplane 54 im Bereich der Spriegelmitte verklebten zweiten Verdeckplane 56 verbleibt. In dem in Fig. 5 rechten Teil ist demnach die Verdeckplane in einer für bestimmte Anwendungsfälle erforderlichen Weise doppelt liegend (erste Verdeckplane 54, zweite Verdeckplane 56) ausgebildet.

Es sei darauf hingewiesen, daß die Fig. 3 bis 5 bestimmte Ausführungsbeispiele zeigen, auf die die Erfindung jedoch nicht beschränkt ist. So kann beispielsweise ein Gießform mehrere Formhohlräume zur Bildung mehrerer oder aller Spriegel eines Faltschiebedaches aufweisen, wobei die zwischen den Spriegeln liegenden Bereiche der Verdeckplane jeweils über geeignete Abzweigungskanäle aus der Gießform herausgeführt werden. Außerdem können andere Verstärkungsbauteile an eine Verdeckplane angeformt werden, die große Flächenbereiche der Verdeckplane unterstützen und nur kleine, zum Abknicken oder Falten eines Verdecks erforderliche Bereiche frei lassen, wie nicht näher dargestellt zu werden braucht.

### Bezugszeichenliste

- 2: Kraftfahrzeug
- 4: Faltschiebedach
- 6: Dachausschnitt
- 8: Verdeckplane
- 10: Spriegel
- 10a: flache Leiste
- 10b: Längsrippe
- 12: Gießform
- 14: Spriegel
- 16: Verdeckplane
- 18: Oberwerkzeug
- 20: Unterwerkzeug
- 22: Formhohlraum
- 24: Gießform
- 26: Oberwerkzeug
- 26a: festes Formteil
- 26b: bewegliches Formteil
- 28: Unterwerkzeug
- 30: Formhohlraum
- 32: Spriegel
- 34: Verdeckplane
- 36: Abzweigungskanal
- 38: Pfeil
- 40: Gießform
- 42: Oberwerkzeug
- 42a: festes Formteil
- 42b: bewegliches Formteil
- 44: Unterwerkzeug
- 46: Doppelpfeil
- 48: Formhohlraum
- 50: Spriegel
- 52: Abzweigungskanal
- 54: erste Verdeckplane
- 56: zweite Verdeckplane
- t: gesamte Tiefe von 10
- a: Tiefenbereich

## Patentansprüche

1. Verfahren zum Verstärken einer Verdeckplane oder dergleichen, insbesondere für Kraftfahrzeugverdecke, wobei die Verdeckplane ganz oder teilweise mit Verstärkungsbauteilen unterlegt wird, **dadurch gekennzeichnet, daß** das Verstärkungsbauteil (Spriegel 14) in einer Gießform (12) direkt an die Verdeckplane (16) angeformt wird.

2. Verfahren nach Anspruch 1, **dadurch gekennzeichnet, daß** die zu verstärkende Verdeckplane (12) in eine im wesentlichen der Form des Verstärkungsbauteils (Spriegel 14) entsprechende Kunststoff-Gießform (12) so eingelegt wird, daß es einen Formhohlraum (22) zur Bildung des Verstärkungsbauteils begrenzt, und daß das Verstärkungsbauteil durch Einspritzen eines geeigneten Kunststoffmaterials an die Verdeckplane (16) angespritzt wird.

3. Verfahren nach Anspruch 1 oder 2, **dadurch gekennzeichnet, daß** das Kunststoffmaterial ein Schaumstoffmaterial ist.

4. Verfahren nach einem der Ansprüche 1 bis 3, wobei das Verstärkungsbauteil nur über einen Teil seiner Verdeckplane zugewandten Fläche mit dieser verbunden wird, **dadurch gekennzeichnet, daß** der nicht mit dem Verstärkungsbauteil (Spriegel 32) zu verbindende Teil der Verdeckplane (34) über einen Abzweigungskanal (36) von dem Formhohlraum (30) für das Verstärkungsbauteil fort und z.B. aus der Gießform (24) herausgeführt wird.

5. Verfahren nach einem der Ansprüche 1 bis 4, wobei die Verdeckplane im Bereich des Verstärkungsbauteils in eine doppelt liegende Verdeckplane übergeht, **dadurch gekennzeichnet, daß** die obere Lage (erste Verdeckplane 54) der doppelt liegenden Verdeckplane über einen Abzweigungskanal (52) aus der Gießform (40) herausgeführt wird.

6. Vorrichtung zur Durchführung des Verfahrens nach einem der Ansprüche 1 bis 5, **dadurch gekennzeichnet, daß** die Gießform (12) zumindest in der Ebene der eingelegten Verdeckplane (16) in ein die Verdeckplane abstützendes Oberwerkzeug (18) und ein den Formhohlraum (22) zur Bildung des Verstärkungsbauteils (Spriegel 14) aufweisendes Unterwerkzeug (20) geteilt ist.

7. Vorrichtung nach Anspruch 6 zur Durchführung eines Verfahrens gemäß einem der Ansprüche 4 oder 5, **dadurch gekennzeichnet, daß** der Abzweigungskanal (36) im Oberwerkzeug (26) ausgebildet ist.

8. Vorrichtung nach Anspruch 7, **dadurch gekennzeichnet, daß** das Oberwerkzeug (26) im Bereich des Abzweigungskanals (36) geteilt ist, wobei die Teilungsfuge als Abzweigungskanal (36) ausgebildet ist.

9. Vorrichtung nach Anspruch 8, **dadurch gekennzeichnet, daß** das Oberwerkzeug (26) in ein festes Formteil (26a) und ein bewegliches, schieberartiges Formteil (26b) geteilt ist.
